# EUROPEAN PATENT SPECIFICATION

(11) **EP 3 671 972 B1**
(45) Date of publication and mention of the grant of the patent: **28.07.2021**
(21) Application number: 18215542.4
(22) Date of filing: 21.12.2018
(51) Int. Cl.: H01R 13/53, H01R 31/06, H02B 13/035, H01R 31/02

(54) **CONNECTION APPARATUS FOR A MEDIUM VOLTAGE SWITCHGEAR COMPARTMENT**
VERBINDUNGSVORRICHTUNG FÜR EINEN MITTELSPANNUNGSSCHALTANLAGENRAUM
APPAREIL DE CONNEXION POUR UN COMPARTIMENT D'APPAREILLAGE DE COMMUTATION MOYENNE TENSION

(43) Date of publication of application: 24.06.2020
(73) Proprietor: ABB Schweiz AG, 5400 Baden (CH)
(72) Inventor: Gentsch, Dietmar, 40882 Ratingen (DE); Reuber, Christian, 47877 Willich (DE)
(74) Representative: Maiwald Patent- und Rechtsanwaltsgesellschaft mbH

(56) References cited:
- DE-A1- 4 001 191
- DE-A1- 4 233 986
- DE-A1- 19 852 410
- DE-U1- 29 724 138
- US-B1- 6 242 708

## Description

### FIELD OF THE INVENTION

The present invention relates to a connection apparatus for a medium voltage switchgear compartment, and to medium voltage switchgear having one or more of such a connection apparatus.

### BACKGROUND OF THE INVENTION

Medium voltage switchgear, such as Gas insulated switchgear (GIS), usually requires the connection of one or several cables to each phase. These cables can be made for inner cone bushings or for outer cone bushings. Therefore, GIS compartments usually have to be designed to use either inner cone bushings or outer cone bushings. i.e. each of the two variants results practically in a different compartment where the cables are to be connected, usually at the Circuit Breaker (CB) compartment.

DE19852410A1 describes a switching system that has a wall lead through from the interior of the switching system to an output cable for connection to a cable with a certain shape of connecting head. An isolating adapter used for connecting another design of connecting cable can be connected to one side of the wall lead through, so that the connecting cable can be coupled to the other side.

DE4001191A1 describes that the plug connector has a conical coupling receiving part formed in a single part container, and electrical connection members arranged central to the receiving part, which comprises a first coupling receiver formed as an inner cone, and a second coaxial receiver formed as an outer cone, and a third receiver, connected to the region of contact of the connection members of the receivers by an electric lead, which extends perpendicularly to the ends of the first and second receivers.

US6242708B1 describes a modular three position vacuum isolator switch that is operable to connect a stationary contact to either of two moveable contacts or an intermediate position which is out of electrical engagement with either of the moveable contacts. One of the moveable contacts is grounded and the other is connected a power source. The stationary contact is connected to two electrical connectors. One of the two electrical connectors is connected to a breaker and the second is connected to a corresponding input on a second similar isolator switch model, which itself is connected to a second line source. The stationary contact is connected to the circuit interrupter for connecting the circuit interrupter to either of the two line sources, to ground, or to isolate the circuit interrupter by placing the isolator switch module in the intermediate position.

There is a need to provide for improved cable connection means for a medium voltage switch gear.

### SUMMARY OF THE INVENTION

Therefore, it would be advantageous to have improved cable connection means for a medium voltage switchgear compartment.

The object of the present invention is solved with the subject matter of the independent claim, wherein further embodiments are incorporated in the dependent claims. In a first aspect, there is provided a connection apparatus for a medium voltage switchgear compartment as defined in appended claim 1.

In a second aspect, there is provided a medium voltage switchgear compartment as defined in appended claim 15.

In a first embodiment of the application, there is provided connection apparatus for a medium voltage switchgear compartment. The connection apparatus comprises an outer cone cable connection, and a cable connection block. The outer cone cable connection is configured to connect to a compartment of a medium voltage switchgear, such as a circuit breaker compartment. The cable connection block comprises an inner cone connection. The cable connection block comprises also one or more inner cone cable connection. The inner cone connection is configured to connect to the outer cone cable connection. The one or more inner cone cable connection is configured to connect to one or more cable. Each of the one or more inner cone cable connection is configured to connect to a different cable of the one or more cable.

In this manner, the same compartment can utilize cable connections that use both inner cone bushings and outer cone bushings, rather than a bespoke compartment having to be utilized for each situation. This is achieved through utilization of a standardized compartment with an outer cone cable connection, to which is added a cable connection block for the situation where an inner cone cable connection is required.

In an example, the cable connection block comprises an inner conductor with one or more electrical taps for electrical connection to the one or more cable.

In an example, the cable connection block comprises one or more cone connection for a voltage transformer.

In an example, the one or more cones of the one or more cone connection for a voltage transformer is smaller than the one or more cones of the one or more inner cone cable connection.

In an example, a cone connection for a voltage transformer has a centre axis parallel to a centre axis of the cable connection block.

In an example, a cone connection for a voltage transformer has a centre axis perpendicular to a centre axis of the cable connection block.

In an example, not part of the invention, the cable connection block comprises a cylindrical inner hollow space or bore that extends to the cone connection for a voltage transformer. The cable connection block is configured to be connected to the outer cone cable connection via a screw inserted through the cone connection for a voltage transformer.

In an example, the cone connection for a voltage transformer is configured to be closed by a filler-plug. Also the cable connections are configured to be closed by filler plugs in case no cable is inserted there.

In an example, the cable connection block comprises one or more fins.

In an example, the cable connection block is covered by a conductive layer, that is configured to connect to an earth shield of the one or more cables.

In an example, the outer cone cable connection is configured to enable a current transformer to be arranged around its outer surface.

According to the invention, an inner cone cable connection of the cable connection block comprises a hollow conductor for the insertion of a medium voltage cable connection. The hollow conductor has a lateral hole. The cable connection block is configured to be connected to the outer cone cable connection via a screw inserted through the lateral hole.

In an example, the one or more inner cone cable connection comprises a plurality of hollow conductors. One or more hollow conductors are configured for the insertion of one or more medium voltage cable connection of a first size and one or more hollow conductors are configured for the insertion of one or more medium voltage cable connection of a second size.

In an example, the outer cone cable connection comprises one or more cone connection for a voltage transformer.

In an example, a cone connection for a voltage transformer has a centre axis parallel to a centre axis of the cable connection block when the outer cone cable connection is connected to the cable connection block.

In an example, a cone connection for a voltage transformer has a centre axis perpendicular to a centre axis of the cable connection block when the outer cone cable connection is connected to the cable connection block.

In an example, not part of the invention, the cable connection block is configured to be connected to the outer cone cable connection via a screw inserted through the cone connection for a voltage transformer of the outer cone cable connection.

In an example, the cable connection block comprises fixation means configured to connect to fixation receiving means of the compartment of the medium voltage switchgear.

In an example, the fixation means comprises a T shaped extension and wherein the fixation receiving means comprises a rail, and wherein the T shaped extension is configured to be inserted into and slid along the rail.

In a second embodiment of the application, there is provided a medium voltage switchgear compartment comprising one or more connection apparatus according to the first embodiment.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows an example of a medium voltage switchgear compartment with an outer cone connection, a cable connection block, a circuit breaker drive, a voltage transformer and a current transformer;
Fig. 2 shows an example of a cable connection block;
Fig. 3 shows an example of a cable connection block, not part of the invention;
Fig. 4 shows an example, not part of the invention, of a medium voltage switchgear compartment with an outer cone connection, a cable connection block, a circuit breaker drive, a voltage transformer and a current transformer;
Fig. 5 shows an example of a medium voltage switchgear compartment with an outer cone connection, a cable connection block, a circuit breaker drive, a voltage transformer and a current transformer;
Fig. 6 shows an example of a medium voltage switchgear compartment with an outer cone connection, a cable connection block, a circuit breaker drive, and a current transformer;
Fig. 7 shows an example, not part of the invention, of a medium voltage switchgear compartment with an outer cone connection, a cable connection block, a circuit breaker drive, a voltage transformer and a current transformer;
Fig. 8 shows an example of a medium voltage switchgear compartment with an outer cone connection, a cable connection block, a circuit breaker drive, a voltage transformer and a current transformer; and
Fig. 9 shows an example of a medium voltage switchgear compartment with an outer cone connection, a cable connection block, a circuit breaker drive, a voltage transformer and a current transformer;

### DETAILED DESCRIPTION OF EMBODIMENTS

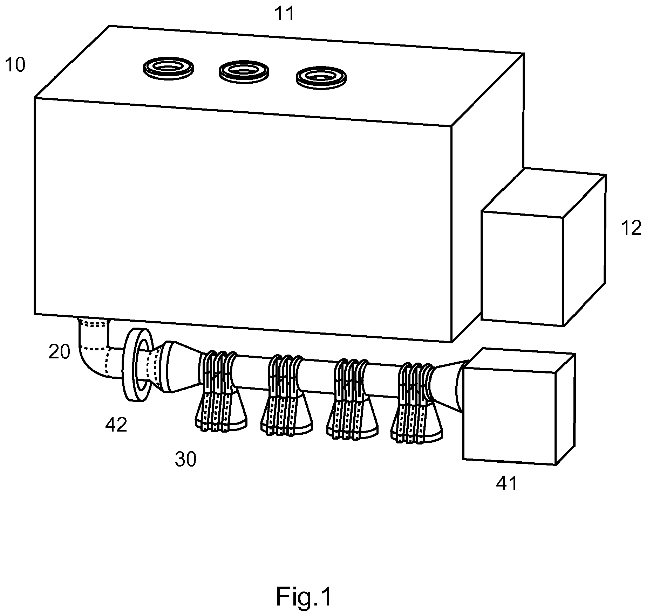

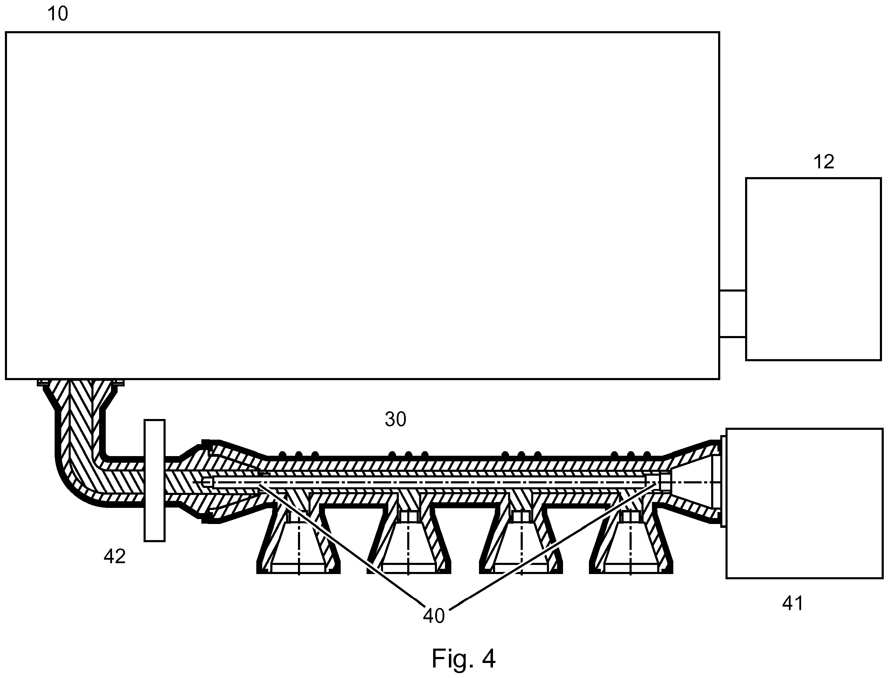

Figs. 1-9 show examples of connection apparatus for a medium voltage switchgear, along with examples of medium voltage switchgear such as GIS, voltage (VT) and current transformers (CT), and circuit breaker (CB) drives. In the specific examples shown, the medium voltage switchgear compartment 10 is a circuit breaker compartment 10.

These figures show a connection apparatus for a medium voltage switchgear compartment 10, which for example can be a circuit breaker compartment. The connection apparatus comprises an outer cone cable connection 20, and a cable connection block 30. The outer cone cable connection 20 is configured to connect to a compartment 10 of a medium voltage switchgear. The cable connection block 30 comprises an inner cone connection 31 and the cable connection block 30 comprises one or more inner cone cable connections 32. The inner cone connection 31 of the cable connection block 30 is configured to connect to the outer cone cable connection 20 that can be connected to the compartment 10 of the medium voltage switchgear. The one or more inner cone cable connections 32 of the cable connection block 30 are configured to connect to one or more cables. Each of the one or more inner cone cable connections 32 can connect to a different cable of the one or more cables. In embodiments, the same type of cable with its connector can connect to the inner cone cable connections 32 of the cable connection block 30. However, the inner cone cable connections 32 of the cable connection block 30 can be of different sizes in order that cables and associated connectors of different sizes can be connected.

According to an example, the cable connection block 30 comprises an inner conductor 35 with one or more electrical taps 36 for electrical connection to the one or more cable.

According to an example, the cable connection block 30 comprises one or more cone connections 33 for a voltage transformer 41.

According to an example, the one or more cones of the one or more cone connections 33 for a voltage transformer 41 are smaller than the one or more cones of the one or more inner cone cable connections 32.

According to an example, a cone connection 33 for a voltage transformer has a centre axis aligned with a centre axis of the cable connection block 30.

According to an example, a cone connection 33 for a voltage transformer has a centre axis perpendicular to a centre axis of the cable connection block 30.

According to an example, not part of the invention, the cable connection block 30 comprises a cylindrical inner hollow space or bore 37 that extends to the cone connection 33 for a voltage transformer 41 that has the centre axis aligned with the centre axis of the cable connection block 30. The cable connection block 30 can then be connected to the outer cone cable connection 20 via a long screw 40 inserted through the cone connection 33 for a voltage transformer 41.

According to an example, the one or more cone connections 33 for a voltage transformer 41 are configured to be closed by a filler-plug 43. Also the cone connections 32 for the cables can be configured to be closed by a filler plug 43 in case no cable is inserted in the particular cable connection. This is to avoid that the number of cable connections 32 of the actually used cabel connection block 30 always has to match the number of connected cables.

According to an example, the cable connection block 30 comprises one or more fins 34.

According to an example, the cable connection block 30 is covered by a conductive layer 39, that is configured to connect to an earth shield of the one or more cables.

According to an example, the outer cone cable connection 20 is configured to enable a current transformer 42 to be arranged around its outer surface.

According to the invention, an inner cone cable connection 32 of the cable connection block 30 comprises a hollow conductor 51 for the insertion of a medium voltage cable connection. The hollow conductor 51 has a lateral hole. The cable connection block 30 is configured to be connected to the outer cone cable connection 20 via a screw 54 inserted through the lateral hole.

According to an example, the one or more inner cone cable connection comprises a plurality of hollow conductors 51, 57. One or more hollow conductors 51 are for the insertion of one or more medium voltage cable connection of a first size and one or more hollow conductors 57 are for the insertion of one or more medium voltage cable connection of a second size.

According to an example, the outer cone cable connection 20 comprises one or more cone connections 61 for a voltage transformer 41.

According to an example, a cone connection 61 for a voltage transformer 41 of the outer cone cable connection 20 has a centre axis aligned with a centre axis of the cable connection block 30 when the outer cone cable connection 20 is connected to the cable connection block 30.

According to an example, a cone connection 61 for a voltage transformer 41 of the outer cone cable connection 20 has a centre axis perpendicular to a centre axis of the cable connection block 30 when outer cone cable connection is connected to the cable connection block 30.

According to an example, not part of the invention, the cable connection block 30 is configured to be connected to the outer cone cable connection 20 via a screw 62 inserted through the cone connection 61 for a voltage transformer of the outer cone cable connection 20 that has a centre axis aligned with the centre axis of the cable connection block 30 when the outer cone cable connection 20 is connected to the cable connection block 30.

According to an example, the cable connection block 30 comprises fixation means 80 configured to connect to fixation receiving means 81 of the compartment 10 of the medium voltage switchgear.

According to an example, the fixation means 80 comprises a T shaped extension and the fixation receiving means 81 comprises a rail. The T shaped extension is configured to be inserted into and slid along the rail.

The figures also show a medium voltage switchgear compartment 10 comprising one or more connection apparatus as described above.

Thus, it is enabled to use a standardized compartment with an outer cone cable connection and to add a cable connection block in case an inner cone cable connection is required.

Continuing with the figures, figure 1 shows a first embodiment. A Gas Insulated Switchgear Circuit Breaker (GIS CB) compartment 10 is shown with three incoming bushings 11 at its upper side, These are for example for connecting the three phases of the switchboard to the busbars by means of a three position earth/disconnecting switch (not shown). Inside of the compartment, a circuit breaker (CB) is located (not shown). The drive 12 of the CB is outside of the compartment in this example.

Three outer cone cable connections 20 - one for each phase - extend through the lower end of the compartment.

In case the compartment 10 is foreseen for outer cone cable connection, the cables can directly be connected to these outer cone cable connections 20 with a screw through the head of the cable into the connection 20.

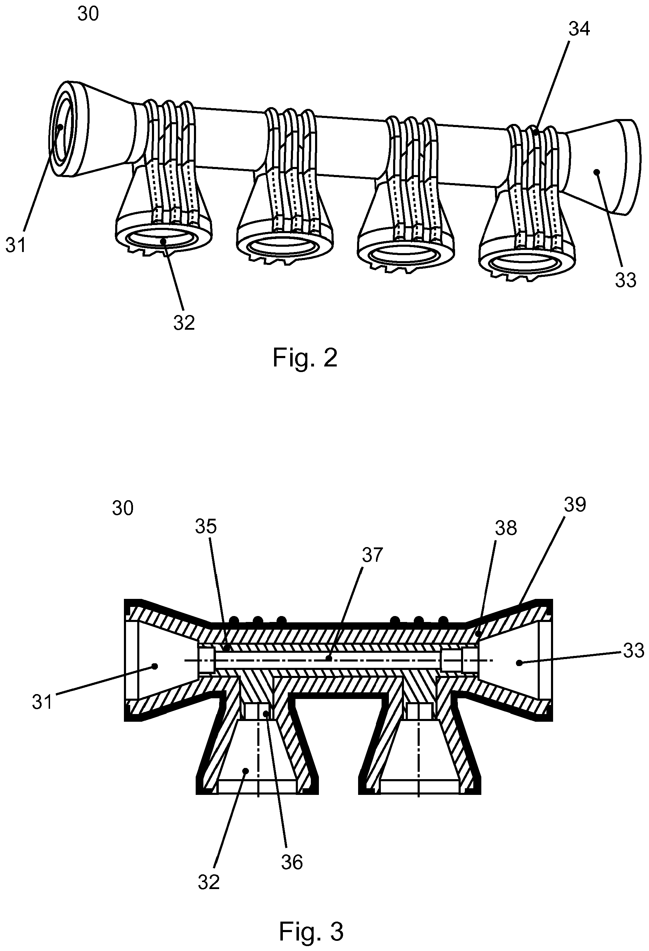

In case the compartment 10 is foreseen for inner cone cable connection, a cable connection block 30 can be installed. Further details of this part 30 are shown in figures 2 to 9.

The block 30 comprises one connection 31 to connect it to the outer cone cable connection 20 of the compartment 10. The outer cone cable connection 20 can be an integral part of the compartment 10 or be completely separate to the compartment 10. However, in either case it is considered that the outer cone cable connection is able to connect to the compartment 10, in that the outer cone cable connection 20 can come in various forms for the same compartment 10, as here described.

The block 30 further comprises one or more - usually up to four- inner cone connections 32 for cables. Figure 2 shows four connections 32 and figure 3 shows two connections 32, as examples. The block 30 can further comprise a connection 33 for an optional voltage transformer (VT). The size of the cone for the VT can be different from the size of the cones for the cables. In general, the cone for the VT can be relatively small, as there will be no high currents flowing through the VT. The fixation of the cables and the voltage transformer to the block 30 is made by screws through the outer earth shield of the cables or of the VT into the block 30. The cable connection block 30 can have embedded dowels for that purpose.

The block 30 comprises an inner conductor 35 with electrical taps 36 for the electrical connection of all cables. According to an example not part of the invention, the inner conductor 35 can contain a cylindrical inner hollow space or bore 37 so that the block 30 can be screwed onto the outer cone 20 with a long screw 40 that is running through the space 37. This screw connection is made prior to the installation of the VT. In case no VT is required, the connection 33 can be closed by a filler-plug 43. In case one ore more cable connections 32 have no cable inserted, these cable connections 32 can be closed by a filler plug 43.

The electrically conductive parts 35, 36 of the block 30 can be surrounded by an insulating material 38, e.g. epoxy, BMC (bulk molding compound) or thermoplastic. This material can be applied in a molding process.

The block 30 can have optional fins 34 for improved transfer of heat to the surrounding air. The fins can have a vertical orientation further to improve the transfer of heat to the surrounding air.

The block 30 is advantageously covered with a conductive, earthed layer 39 to connect the earth shields of the cables and to avoid outside electrical fields. This layer 39 can for example be made of conductive paint or it can be made of metal layer spraying. The block 30 can comprise means for a safe dielectric design like shields for avoiding the concentration of electric field strength at certain locations like triple points.

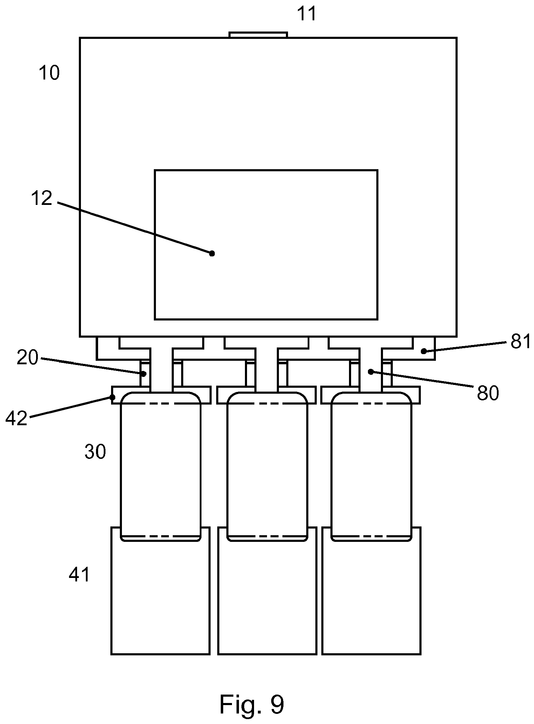

The block 30 can provide means for the mechanical connection to the compartment or to another supporting structure, depending on the general design of the switchgear. Figure 9 shows further details regarding this.

Current Transformers (CTs) 42 can be arranged around the conductor between the compartment and the first cable connection 32. This position has the advantage that the same design of the compartment can further be used for inner cone and for outer cone cable connection.

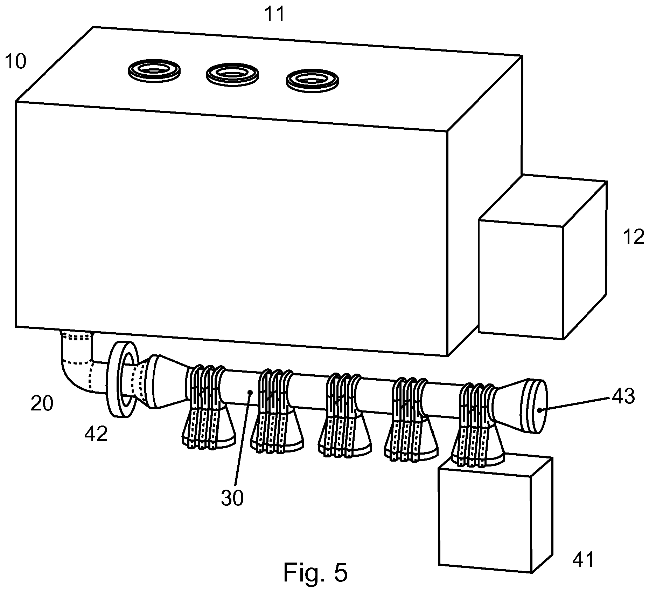

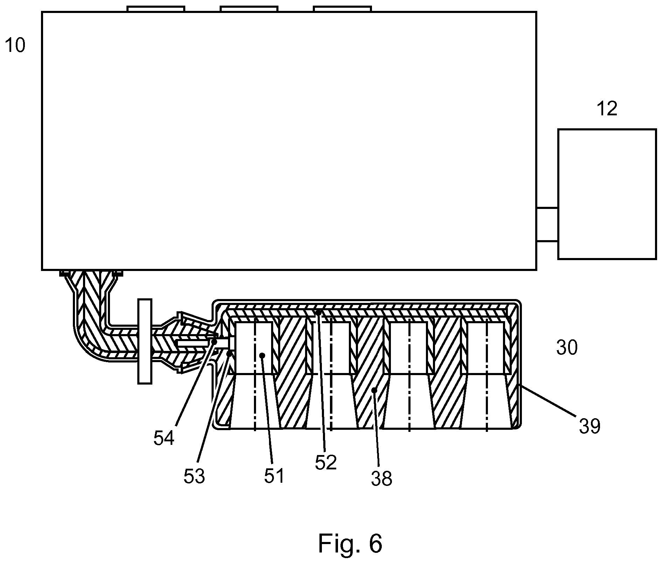

Figure 5 shows an alternative arrangement where the VTs 41 are connected vertically, in parallel to the cables, and at the front side of the switchgear. The size of the cone for the VT can be different from the size of the cones for the cables. In general, the cone for the VT can be relatively small, as there will be no high currents flowing through the VT. The cone at the horizontal end of the block 30 is still required for the shown method of screwing block 30 onto the connection 20 with the long screw 40. After screwing, this cone can be covered with a filler plug 43. Figure 6 shows a way of screwing a cable connection block 30 onto the connection 20 according to the invention.

The electrical part of the block 30 consists mainly of an electrical connection rail 52 and one or several, usually up to four, hollow conductors 51. The hollow conductors 51 are dedicated for the insertion of medium voltage (MV) cables. The hollow conductors 51 are connected to the rail 52 for example by screwing. This rail 52 is then screwed onto the connection 20 of the compartment.

The block 30 shown in figure 6 provides a hole in the first hollow conductor 51. It is then possible to insert a screw 54 through this hole and to realise a solid mechanical and electrical connection of the rail 52 to the conductor of the connection 20. A screw that is shorter than the inner diameter of the hollow conductor 51 can be inserted after the manufacturing of the block 30. A screw that is longer than the inner diameter of the hollow conductor 51 can be inserted during the assembly of the electrical part of the block 30 and prior to the embedding into an insulating material. During the process of embedding, the hole for the screw and the screw itself - if already assembled - are sealed. This avoids that insulating material fills this space. As an example, a seal 53 is shown in figure 6. This seal can be in principal a ring made for example from silicone rubber. It is located between the inner surface of the rail 52 and the outer surface of the first hollow conductor 51.

For the assembly of the block 30 onto the connection 20, the screw 54 can be turned and tightened with a ratchet spanner. The available space inside the hollow conductor 51 is sufficient for the application of a ratchet spanner.

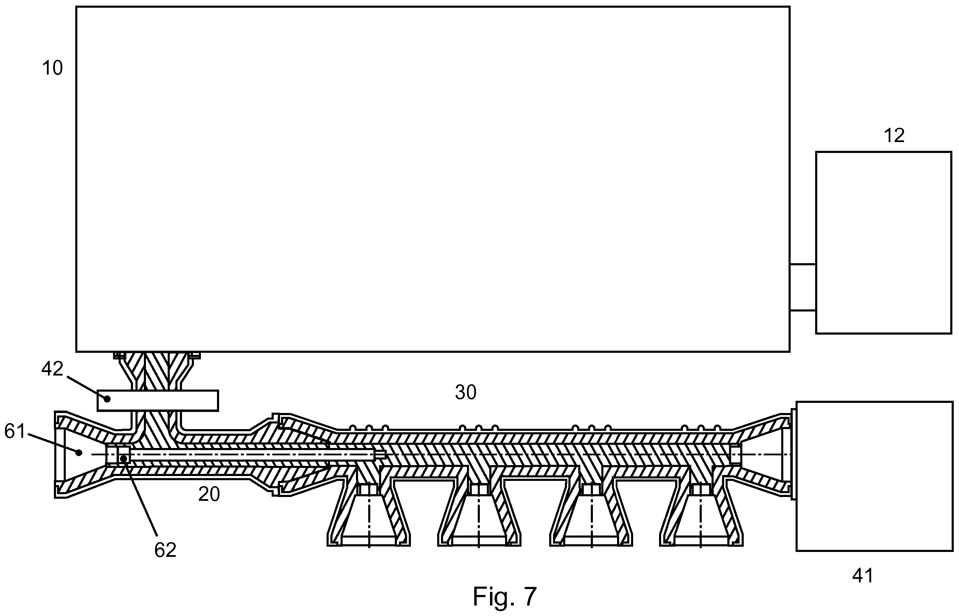

Figure 7 shows another way, not part of the invention, to place and tighten a screw between the cable connection of the compartment 20, and the cable connection block 30. Part 20 has an opening 61 at the rear side so that a screw 62 can be inserted through the conductor of part 20 into the conductor of part 30. After the assembly of the screw 62, the opening 61 can be closed with a filler plug, or it can be used to connect a VT in case of need. If a VT is connected at the opening 61, and in case the general direction of energy flow in that panel is from the CB to the cable, it is advantageous to arrange the CT 42 in the position shown in figure 7, as the CT can then also detect a potential failure current through the VT.

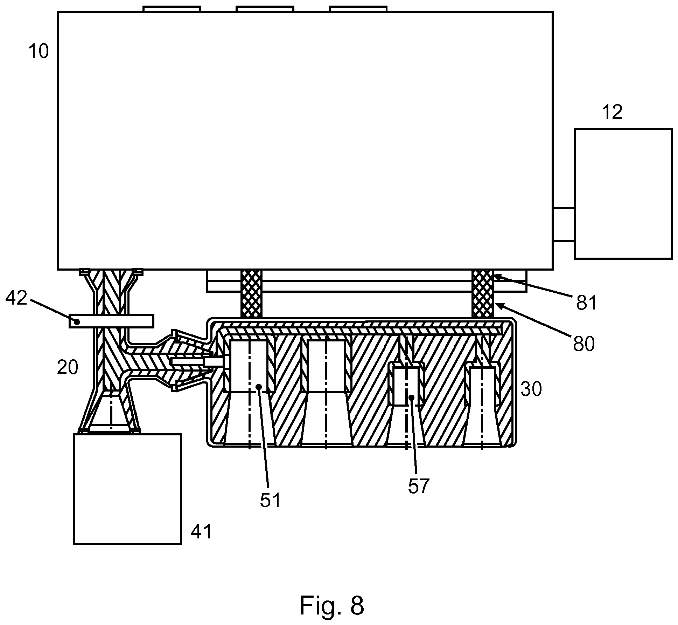

Figure 8 shows another advantageous way for the placement of the VT 41 in an area of the switchgear that is in general unused or free, i.e. at the rear end of the panel and in parallel to the cables that are to be connected to the cable connection block 30. Further, figure 8 shows how cable connections for different sizes can be combined. The same block 30 comprises here two larger hollow conductors 51 and two smaller conductors 57 for cable insertion as an example.

Figure 9 shows a frontal view on the discussed panel. Together with figure 8, it shows means of fixation 80 of the cable connection block 30. The means of fixation 80 are at least two vertical extensions for the mechanical support of the block 30 by the rails 81 under the compartment 10. In the shown arrangement, the blocks 30 can be easily inserted from the front side during production. The T shaped extensions 80 can slide on the rails 81. When inserted and pushed to their final position, they can easily be fixed, for example by additional screws, without the need of holding the relatively heavy parts in position, as their mass is already supported by the rails 81 and the fixation means 80. For the design of the fixation means 80 and rails 81 it has to be considered that strong lateral forces will occur between the phases under short circuit conditions. Further, additional means of support at the lower end of the cable connection blocks 30 can be considered, for example between neighbored blocks and/or between a block and the mechanical structure of the panel. Depending on the general design of the GIS panel it can be advantageous to fix the rails 81 not directly to a compartment of the GIS, but to different parts of the mechanical structure of the GIS, for example to a mechanical frame. Furthermore, the rails 81 can become a supporting part of the mechanical structure of the GIS, for example they can be used for stiffening a mechanical frame, or the rails 81 can be used to reduce the bulging of the GIS compartment 10 when it is pressurized.

### Reference Numerals

10 GIS compartment, in this case a CB compartment
11 Incoming bushings (e.g. from busbars and/or earth/disconnecting switch)
12 CB drive
20 Outer cone cable connection of the compartment
30 Cable connection block
31 Inner cone connection to 20
32 One or more inner cone connections for cables
33 Connection to voltage transformer (VT)
34 Fins for improved heat transfer to the surrounding air
35 Conductor inside of the cable connection block
36 Electrical tap
37 Cylindrical, hollow space inside of 35
38 Insulating material
39 Earthed layer
40 Long screw
41 Voltage transformer
42 Current transformer
43 Filler plug
51 Hollow conductor for cable insertion
52 Electrical connection rail
53 Seal
54 Screw
57 Hollow conductor for cable insertion for a different size compared to 51
61 Opening for screw tightening and optional VT connection
62 Screw
80 Means of fixation of cable connection block
81 Means of fixation of the compartment

## Claims

1. A connection apparatus for a medium voltage switchgear compartment (10), the connection apparatus comprising:
- an outer cone cable connection (20); and
- a cable connection block (30);
wherein, the outer cone cable connection (20) is configured to connect to a compartment (10) of a medium voltage switchgear;
wherein, the cable connection block (30) comprises an inner cone connection (31) and the cable connection block (30) comprises one or more inner cone cable connection (32);
wherein, the inner cone connection (31) is configured to connect to the outer cone cable connection (20);
wherein an inner cone cable connection (32) of the cable connection block (30) comprises a hollow conductor (51) for the insertion of a medium voltage cable connection, and wherein the hollow conductor (51) has a lateral hole, and wherein the cable connection block (30) is configured to be connected to the outer cone cable connection (20) via a screw (54) inserted through the lateral hole; and
wherein, the one or more inner cone cable connection (32) is configured to connect to one or more cable, wherein each of the one or more inner cone cable connection (32) is configured to connect to a different cable of the one or more cable.

2. Connection apparatus according to claim 1, wherein the cable connection block (30) comprises an inner conductor (35) with one or more electrical taps (36) for electrical connection to the one or more cable.

3. Connection apparatus according to any of claims 1-2, wherein the cable connection block (30) comprises one or more cone connection (33) for a voltage transformer (41); and optionally wherein the one or more cones of the one or more cone connection (33) for a voltage transformer (41) is smaller than the one or more cones of the one or more inner cone cable connection (32).

4. Connection apparatus according to claim 3, wherein a cone connection (33) for a voltage transformer has a centre axis aligned with a centre axis of the cable connection block (30).

5. Connection apparatus according to claim 3, wherein a cone connection (33) for a voltage transformer has a centre axis perpendicular to a centre axis of the cable connection block.

6. Connection apparatus according to any of claims 3-5, wherein the cone connection (33) for a voltage transformer is configured to be closed by a filler-plug (43).

7. Connection apparatus according to any of claims 1-6, wherein the one or more cable connections (32) are configured to be closed by a filler-plug (43).

8. Connection apparatus according to any of claims 1-7, wherein the cable connection block (30) comprises one or more fins (34).

9. Connection apparatus according to any of claims 1-8, wherein the cable connection block (30) is covered by a conductive layer (39), that is configured to connect to an earth shield of the one or more cables.

10. Connection apparatus according to any of claims 1-9, wherein the outer cone cable connection (20) is configured to enable a current transformer (42) to be arranged around its outer surface.

11. Connection apparatus according to claim 1, wherein the one or more inner cone cable connection comprises a plurality of hollow conductors (51, 57), wherein one or more hollow conductors (51) are for the insertion of one or more medium voltage cable connection of a first size and one or more hollow conductors (57) are for the insertion of one or more medium voltage cable connection of a second size.

12. Connection apparatus according to any of claims 1-11, wherein the outer cone cable connection (20) comprises one or more cone connection (61) for a voltage transformer (41); and optionally wherein a cone connection (61) for a voltage transformer has a centre axis aligned with a centre axis of the cable connection block (30) when the outer cone cable connection (20) is connected to the cable connection block (30).

13. Connection apparatus according to claim 12, wherein a cone connection (61) for a voltage transformer has a centre axis perpendicular to a centre axis of the cable connection block (30) when the outer cone cable connection (20) is connected to the cable connection block (30).

14. Connection apparatus according to any of claims 1-13, wherein the cable connection block (30) comprises fixation means (80) configured to connect to fixation receiving means (81) of the compartment (10) of the medium voltage switchgear; and optionally wherein the fixation means (80) comprises a T shaped extension and wherein the fixation receiving means (81) comprises a rail, and wherein the T shaped extension is configured to be inserted into and slid along the rail.

15. A medium voltage switchgear compartment (10) comprising one or more connection apparatus according to any of claims 1-14.

## Patentansprüche

1. Anschlussvorrichtung für einen Mittelspannungs-Schaltanlagenraum (10), wobei die Anschlussvorrichtung Folgendes umfasst:
- einen Außenkonuskabelanschluss (20); und
- einen Kabelanschlussblock (30),
wobei der Außenkonuskabelanschluss (20) konfiguriert ist, mit einem Raum (10) einer Mittelspannungsschaltanlage verbunden zu sein;
wobei der Kabelanschlussblock (30) einen Innenkonusanschluss (31) umfasst und der Kabelanschlussblock (30) eine oder mehrere Innenkonuskabelanschlüsse (32) umfasst;
wobei der Innenkonusanschluss (31) konfiguriert ist, mit dem Außenkonuskabelanschluss (20) verbunden zu sein;
wobei ein Innenkonuskabelanschluss (32) des Kabelanschlussblocks (30) einen Hohlleiter (51) zum Einführen eines Mittelspannungskabelanschlusses umfasst und wobei der Hohlleiter (51) ein seitliches Loch aufweist und wobei der Kabelanschlussblock (30) konfiguriert ist, über eine Schraube (54), die durch das seitliche Loch eingeführt wird, mit dem Außenkonuskabelanschluss (20) verbunden zu sein; und
wobei der eine oder die mehreren Innenkonuskabelanschlüsse (32) konfiguriert sind, mit einem oder mehreren Kabeln zu verbinden, wobei jeder des einen oder der mehreren Innenkonuskabelanschlüsse (32) konfiguriert ist, mit einem unterschiedlichen Kabel des einen oder der mehreren Kabel verbunden zu sein.

2. Anschlussvorrichtung nach Anspruch 1, wobei der Kabelanschlussblock (30) einen Innenleiter (35) mit einem oder mehreren elektrischen Abgriffen (36) zur elektrischen Verbindung mit dem einen oder den mehreren Kabeln umfasst.

3. Anschlussvorrichtung nach einem der Ansprüche 1-2, wobei der Kabelanschlussblock (30) einen oder mehrere Konusanschlüsse (33) für einen Spannungstransformator (41) umfasst; und wobei der eine oder die mehreren Konusse des einen oder der mehreren Konusanschlüsse (33) für einen Spannungstransformator (41) wahlweise kleiner als der eine oder die mehreren Konusse des einen oder der mehreren Innenkonuskabelanschlüsse (32) sind.

4. Anschlussvorrichtung nach Anspruch 3, wobei ein Konusanschluss (33) für einen Spannungstransformator eine Mittelachse aufweist, die auf eine Mittelachse des Kabelanschlussblocks (30) ausgerichtet ist.

5. Anschlussvorrichtung nach Anspruch 3,
wobei ein Konusanschluss (33) für einen Spannungstransformator eine Mittelachse aufweist, die zu einer Mittelachse des Kabelanschlussblocks senkrecht ist.

6. Anschlussvorrichtung nach einem der Ansprüche 3-5, wobei der Konusanschluss (33) für einen Spannungstransformator konfiguriert ist, durch einen Verschlussstopfen (43) verschlossen zu sein.

7. Anschlussvorrichtung nach einem der Ansprüche 1-6, wobei der eine oder die mehreren Kabelanschlüsse (32) konfiguriert sind, durch einen Verschlussstopfen (43) verschlossen zu sein.

8. Anschlussvorrichtung nach einem der Ansprüche 1-7, wobei der Kabelanschlussblock (30) eine oder mehrere Rippen (34) umfasst.

9. Anschlussvorrichtung nach einem der Ansprüche 1-8, wobei der Kabelanschlussblock (30) durch eine leitfähige Schicht (39) abgedeckt ist, die konfiguriert ist, mit einer Erdungsabschirmung des einen oder der mehreren Kabel zu verbinden.

10. Anschlussvorrichtung nach einem der Ansprüche 1-9. wobei der Außenkonuskabelanschluss (20) konfiguriert ist zu ermöglichen, dass ein Stromtransformator (42) um seine Außenfläche angeordnet ist.

11. Anschlussvorrichtung nach Anspruch 1, wobei der eine oder die mehreren Innenkonuskabelanschlüsse mehrere Hohlleiter (51, 57) umfassen, wobei einer oder mehrere Hohlleiter (51) zum Einführen eines oder mehrerer Mittelspannungskabelanschlüsse einer ersten Größe dienen und einer oder mehrere Hohlleiter (57) zum Einführen eines oder mehrerer Mittelspannungskabelanschlüsse (57) einer zweiten Größe dienen.

12. Anschlussvorrichtung nach einem der Ansprüche 1-11, wobei der Außenkonuskabelanschluss (20) einen oder mehrere Konusanschlüsse (61) für einen Spannungstransformator (41) umfasst; und wahlweise wobei ein Konusanschluss (61) für einen Spannungstransformator eine Mittelachse aufweist, die auf eine Mittelachse des Kabelanschlussblocks (30) ausgerichtet ist, wenn der Außenkonuskabelanschluss (20) mit dem Kabelanschlussblock (30) verbunden ist.

13. Anschlussvorrichtung nach Anspruch 12, wobei ein Konusanschluss (61) für einen Spannungstransformator eine Mittelachse aufweist, die zu einer Mittelachse des Kabelanschlussblocks (30) senkrecht ist, wenn der Außenkonuskabelanschluss (20) mit dem Kabelanschlussblock (30) verbunden ist.

14. Anschlussvorrichtung nach einem der Ansprüche 1-13, wobei der Kabelanschlussblock (30) Arretierungsmittel (80) umfasst, die konfiguriert sind, mit Arretierungsaufnahmemitteln (81) des Raumes (10) der Mittelspannungsschaltanlage zu verbinden; und wobei das Arretierungsmittel (80) wahlweise eine T-förmige Erweiterung umfasst, das Arretierungsaufnahmemittel (81) eine Schiene umfasst und die T-förmige Erweiterung konfiguriert ist, in die Schiene eingeführt und daran entlang gleitend bewegt zu werden.

15. Mittelspannungs-Schaltanlagenraum (10), der eine oder mehrere Anschlussvorrichtungen nach einem der Ansprüche 1-14 umfasst.

## Revendications

1. Appareil de raccordement destiné à un compartiment (10) d'appareillage de connexion moyenne tension, l'appareil de raccordement comportant :
- un raccordement (20) de câble à cône extérieur ; et
- un bloc (30) de raccordement de câble ;
le raccordement (20) de câble à cône extérieur étant configuré pour se connecter à un compartiment (10) d'un appareillage de connexion moyenne tension ;
le bloc (30) de raccordement de câble comportant un raccordement (31) à cône intérieur et le bloc (30) de raccordement de câble comportant un ou plusieurs raccordements (32) de câble à cône intérieur ;
le raccordement (31) à cône intérieur étant configuré pour se connecter au raccordement (20) de câble à cône extérieur ;
un raccordement (32) de câble à cône intérieur du bloc (30) de raccordement de câble comportant un conducteur creux (51) servant à l'insertion d'un raccordement de câble moyenne tension, et le conducteur creux (51) présentant un trou latéral, et le bloc (30) de raccordement de câble étant configuré pour être relié au raccordement (20) de câble à cône extérieur via une vis (54) insérée à travers le trou latéral ; et
le ou les raccordements (32) de câble à cône intérieur étant configuré pour se connecter à un ou plusieurs câbles, le ou chacun des raccordements (32) de câble à cône intérieur étant configuré pour se connecter à un câble différent parmi le ou les câbles.

2. Appareil de raccordement selon la revendication 1, le bloc (30) de raccordement de câble comportant un conducteur intérieur (35) doté d'une ou de plusieurs prises électriques (36) destinées à un raccordement électrique au(x) câble(s).

3. Appareil de raccordement selon l'une quelconque des revendications 1 à 2, le bloc (30) de raccordement de câble comportant un ou plusieurs raccordements (33) à cône destinés à un transformateur (41) de tension ; et
le ou les cônes du ou des raccordements (33) à cône pour transformateur (41) de tension étant optionnellement plus petits que le ou les cônes du ou des raccordements (32) de câble à cône intérieur.

4. Appareil de raccordement selon la revendication 3, un raccordement (33) à cône destiné à un transformateur de tension présentant un axe central aligné avec un axe central du bloc (30) de raccordement de câble.

5. Appareil de raccordement selon la revendication 3, un raccordement (33) à cône destiné à un transformateur de tension présentant un axe central perpendiculaire à un axe central du bloc de raccordement de câble.

6. Appareil de raccordement selon l'une quelconque des revendications 3 à 5, le raccordement (33) à cône destiné à un transformateur de tension étant configuré pour être fermé par un bouchon obturateur (43).

7. Appareil de raccordement selon l'une quelconque des revendications 1 à 6, le ou les raccordements (32) de câbles étant configurés pour être fermés par un bouchon obturateur (43).

8. Appareil de raccordement selon l'une quelconque des revendications 1 à 7, le bloc (30) de raccordement de câble comportant une ou plusieurs ailettes (34).

9. Appareil de raccordement selon l'une quelconque des revendications 1 à 8, le bloc (30) de raccordement de câble étant recouvert par une couche conductrice (39), qui est configurée pour se connecter à un écran de terre du ou des câbles.

10. Appareil de raccordement selon l'une quelconque des revendications 1 à 9, le raccordement (20) de câble à cône extérieur étant configuré pour permettre à un transformateur (42) de courant d'être disposé autour de sa surface extérieure.

11. Appareil de raccordement selon la revendication 1, le ou les raccordements de câble à cône intérieur comportant une pluralité de conducteurs creux (51, 57), un ou plusieurs conducteurs creux (51) étant destinés à l'insertion d'un ou de plusieurs raccordements de câble moyenne tension d'une première taille et un ou plusieurs conducteurs creux (57) étant destinés à l'insertion d'un ou de plusieurs raccordements de câble moyenne tension d'une seconde taille.

12. Appareil de raccordement selon l'une quelconque des revendications 1 à 11, le raccordement (20) de câble à cône extérieur comportant un ou plusieurs raccordements (61) à cône destinés à un transformateur (41) de tension ; et
un raccordement (61) à cône destiné à un transformateur de tension présentant optionnellement un axe central aligné avec un axe central du bloc (30) de raccordement de câble lorsque le raccordement (20) de câble à cône extérieur est relié au bloc (30) de raccordement de câble.

13. Appareil de raccordement selon la revendication 12, un raccordement (61) à cône destiné à un transformateur de tension présentant un axe central perpendiculaire à un axe central du bloc (30) de raccordement de câble lorsque le raccordement (20) de câble à cône extérieur est relié au bloc (30) de raccordement de câble.

14. Appareil de raccordement selon l'une quelconque des revendications 1 à 13, le bloc (30) de raccordement de câble comportant un moyen (80) de fixation configuré pour se connecter à un moyen récepteur (81) de fixation du compartiment (10) de l'appareillage de connexion moyenne tension ; et le moyen (80) de fixation comportant optionnellement un prolongement en T et le moyen récepteur (81) de fixation comportant un rail, et le prolongement en T étant configuré pour être inséré dans le rail et coulisser le long de celui-ci.

15. Compartiment (10) d'appareillage de connexion moyenne tension comportant un ou plusieurs appareils de raccordement selon l'une quelconque des revendications 1 à 14.
